# EUROPEAN PATENT APPLICATION

(11) **EP 4 589 562 A1**
(43) Date of publication of application: **23.07.2025**
(21) Application number: 24223324.5
(22) Date of filing: 26.12.2024
(51) Int. Cl.: G08B 25/00

(54) **METHODS FOR IMPROVED SENSOR COMMUNICATION WITH A CONTROL PANEL**

(30) Priority: 18.01.2024 US 202418416478
(71) Applicant: Honeywell International Inc., Charlotte, NC 28202 (US)
(72) Inventor: GANESAN, Balamurugan, Charlotte, 28202 (US); S, Ruban, Charlotte, 28202 (US); GEORGE, Eldhose K., Charlotte, 28202 (US)
(74) Representative: Haseltine Lake Kempner LLP

(57) **Abstract**

A method for and system for controlling a building monitoring system including a sensor assembly. The sensor assembly includes a sense element for detecting sensed events in a space, a communication port, and a controller operatively coupled to the sense element and the communication port. The controller is configured to receive from the sense element an indication of a sensed event occurring in the space, transmit an alarm message pertaining to the detected sensed event via the communication port, and after transmitting the alarm message pertaining to the detected sensed event, receive from the sense element an indication of a plurality of subsequent sensed events occurring in the space until a number of transmitted alarm messages reaches a swinger count. When the number of transmitted alarm messages reaches the swinger count, stop transmitting an alarm message for each of the plurality of subsequent sensed events.

## Description

### TECHNICAL FIELD

The present disclosure relates generally to sensor communication, and more particularly to sensor communication between a sensor and a control panel.

### BACKGROUND

Sensors are used in a wide variety of systems including building control systems, industrial control systems, automotive systems, marine systems, aerospace systems and others. One example system is a security system. A security system may include a number of security sensors within a monitored area. The monitored area may be indoors or outdoors, for example. Each of the security sensors may communicate with a security panel, for example. Each of the security panels may communicate with a remote monitoring station. The security sensors within the monitored area may detect a sensed event, and in response, may send an alarm message to the security panel. In some cases, when an event continues to be detected, the security sensor may continue to send alarm messages to the security panel. For example, weather (e.g., wind, snow, rain, etc.) may repeatedly trigger a passive-infrared sensor (PIR), causing the sensor to repeatedly sends alarm messages to the security panel. It will be appreciated that when an alarm is repeatedly communicated from the same sensor to the security panel for what would be considered the same event, traffic on a wireless communication channel and/or a wired field bus between the sensor and the security panel may be increased. This may prevent or delay some alarm messages, including messages from other sensors that share the same wireless communication channel and/or the wired field bus, from reaching the security panel in a timely manner. Moreover, repeatedly communicating alarm messages from the same sensor for what would be considered the same event reduced the battery life of the sensor when battery powered. What would be beneficial are methods and systems for improved sensor communication with a control panel.

### SUMMARY

The present disclosure relates generally to sensor communication, and more particularly to sensor communication between a sensor and a control panel. Sensors are used in a wide variety of systems including building control systems, industrial control systems, automotive systems, marine systems, aerospace systems and others. One example system is a security system of a building. While a security system is used as a concrete example to help understand the concepts, it will be recognized that the present disclosure can be applied to any suitable type of system.

One example may be found in a sensor assembly that includes a sense element for detecting sensed events in a space, a communication port, and a controller operatively coupled to the sense element and the communication port. The controller may be configured to receive from the sense element an indication of a sensed event occurring in the space and transmit an alarm message pertaining to the detected sensed event via the communication port. After transmitting the alarm message pertaining to the detected sensed event, the controller may receive from the sense element an indication of a plurality of subsequent sensed events occurring in the space, and transmit a corresponding alarm message for each of the plurality of subsequent sensed events until a number of transmitted alarm messages reaches a swinger count. When the number of transmitted alarm messages reaches the swinger count, the controller stops transmitting a corresponding alarm message for subsequent sensed events.

Another example may be found in a method for controlling a building monitoring system. The building monitoring system may include a sensor positioned within an area for detecting one or more sensed events in the area. The sensor is operatively coupled to a control panel remote from the sensor. The method may include the sensor detecting a sensed event in the area and transmitting a corresponding alarm message pertaining to the sensed event to the control panel. The sensor detecting a plurality of subsequent sensed events in the area, and the sensor transmitting a corresponding alarm message for each of the plurality of subsequent sensed events to the control panel until a number of transmitted alarm messages reaches a swinger count. When the number of transmitted alarm messages reaches the swinger count, the sensor stops transmitting a corresponding alarm message for subsequent sensed event to the control panel.

Another example may be found in a non-transitory computer readable medium storing instructions thereon that when executed by one or more processors of a sensor cause the one or more processors to: receive an indication of a sensed event occurring in a space from a sense element of the sensor; transmit an alarm message pertaining to the detected sensed event over a wireless and/or wired communication bus; after transmitting the alarm message pertaining to the detected sensed event, receive an indication of a plurality of subsequent sensed events occurring in the space from the sense element of the sensor, and transmit a corresponding alarm message for each of the plurality of subsequent sensed events until a number of transmitted alarm messages reaches a swinger count; and when the number of transmitted alarm messages reaches the swinger count, stop transmitting a corresponding alarm message for subsequent sensed events over the wireless and/or wired communication bus.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
FIG. 1 is schematic block diagram of an illustrative building control system;
FIG. 2 is a schematic block diagram of an illustrative sensor;
FIG. 3 is a flow diagram showing an illustrative method;
FIG. 4 is a schematic sequence diagram showing illustrative messaging in a security system; and
FIG. 5 is a flow diagram showing an illustrative method.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranged by endpoints includes all numbers subsumed within that range (e.g., 1 to 5 includes, 1, 1.5, 2, 2.75, 3, 3.8, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

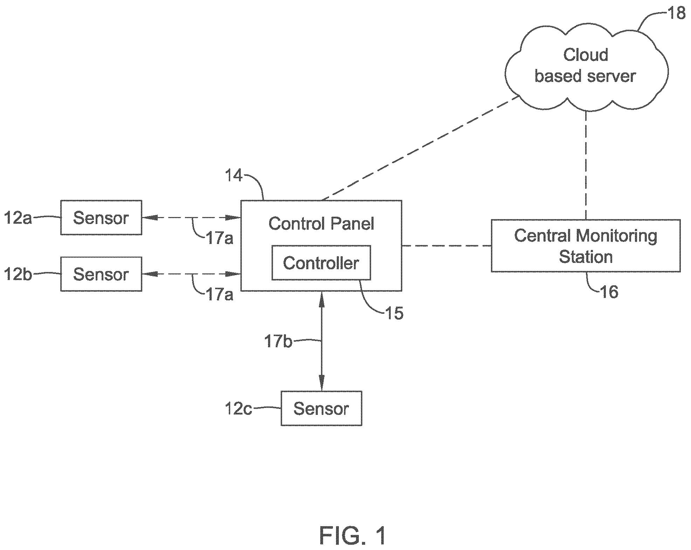

FIG. 1 is schematic block diagram of an illustrative building monitoring system 10. The building monitoring system 10 may include a number of sensors 12, individually labeled as 12a, 12b, and 12c. It will be appreciated that the building monitoring system 10 may include any number of sensors 12. The sensors 12 may include any of a variety of different types of sensors, such as but not limited to, door open sensors, motion sensors, temperature sensors, glass break sensors, infrared sensors, light sensors, water sensors, smoke sensors, fire sensors, noise sensors, temperature sensors, humidity sensors, video sensors with video analytics, and the like. These are just examples.

Each of the sensors 12 may be configured to communicate with a control panel 14 using any of a variety of wired (e.g., sensor 12c) or wireless (e.g., sensors 12a, 12b) communication protocols. The sensors 12 may provide messages to the control panel 14 reporting what, if any, each of the sensors 12 may have detected or sensed, e.g., a sensed event. In some cases, the control panel 14 may provide instructions to at least some of the sensors 12, such as but not limited to, instructing at least some of the sensors 12 to activate at a particular time, or to turn off at another particular time, for example.

In the example shown, the control panel 14 communicates with an off-site central monitoring station (CMS) 16. In some cases, the control panel 14 may communicate detected alarms to the CMS 16. While only one CMS 16 is shown, it will be appreciated that in some cases, the building monitoring system 10 may include more than one CMS 16. For example, the building monitoring system 10 may be distributed between multiple facilities, with each control panel 14 (or multiple control panels 14) reporting to a different CMS 16. In some instances, multiple CMS 16 may be arranged in a hierarchal manner, with perhaps lower level CMS 16 for each building communicating with a higher-level overall CMS 16. This is just an example.

In some cases, the control panel 14 may communicate with a cloud-based server 18. In some cases, the cloud-based server 18 may communicate system configuration information to the control panel 14. The cloud-based server 18 may periodically provide system updates to the control panel 14, for example. In some instances, the CMS 16 may also communicate with the cloud-based server 18. In some cases, the functions of the CMS 16 and the functions of the cloud-based server 18 may be merged into a single block. In some cases, the CMS 16 may be hosted by the cloud-based server 18.

Communication between the control panel 14 and the CMS 16, and communication between the control panel 14 and the cloud-based server 18 may include a cellular communication link, the internet and/or any other suitable communication channel. In some cases, communication between the CMS 16 and the cloud-based server 18 may include a cellular communication link, the internet and/or any other suitable communication channel.

In many cases, the control panel 14 may be configured to communicate wirelessly over a first network and/or a second network with the CMS 16 via one or more wireless communication protocols including, but not limited to, cellular communication, ZigBee, REDLINK^{™}, Bluetooth, WiFi, IrDA, dedicated short range communication (DSRC), EnOcean, and/or any other suitable common or proprietary wireless protocol, as desired. In some cases, the first network and/or the second network may be a wide area network or global network (WAN) including, for example, the Internet. In some cases, a wireless local area network may provide a wireless access point and/or a network host device that is separate from the control panel 14. In other cases, a wireless local area network may provide a wireless access point and/or a network host device that is part of the control panel 14. In some cases, a wireless local area network may include a local domain name server (DNS), but this is not required for all embodiments. In some cases, a wireless local area network may be an ad-hoc wireless network, but this is not required.

In some cases, the control panel 14 may include a controller 15. The sensors 12 may be located throughout a space (e.g., a monitored area). It will be appreciated that in some cases, the control panel 14 may be located near one or more of the sensors 12. In some cases, the control panel 14 may be located remote from the sensors 12. The sensors 12 may be operatively coupled to the control panel 14 via a communication port. In some cases, the communication port may be a bidirectional wireless communication port 17a, and in other cases, the communication port may be a bidirectional wired communication port 17b. These are just examples.

When the building monitoring system 10 is a security system, a controller 15 of the control panel 14 may be configured to determine an armed state and an armed period for the security system. In some cases, the control panel 14 may include a user interface that allows a user to arm and/or disarm the control panel. The armed period may include a predetermined amount of time, such as for example, ten minutes, twenty minutes, two hours, six hours, or any other time as desired. In some cases, the armed period may continue until the security panel 14is disarmed by a user.

The controller 15 may count the number of alarm messages relating to what is considered to be the same event that are sent by the control panel 14 to the CMS 16 for each armed period. When the number of alarm messages exceeds a predetermined control panel swinger count stored by the control panel 14 during an armed period, the controller 15 stops sending further alarm messages relating to what is considered to be the same event to the CMS 16. This may reduce the network traffic between the control panel 14 and the CMS 16 by reducing the number of redundant alarm messages send by the control panel 14 to the CMS 16. When the control panel 14 is subsequently disarmed, the count may be reset to zero.

Each sensor 12 may count the number of alarm messages relating to what is considered to be the same event that are sent by the sensor 12 to the control panel 14 during each armed period. When the number of alarm messages exceeds a predetermined sensor swinger count stored by the corresponding sensor 12 during an armed period, the corresponding sensor 12 stops sending further alarm messages relating to what is considered to be the same event to the control panel 14. This may reduce the network traffic between the sensors 12 and the control panel 14 by reducing the number of redundant alarm messages send by the sensors 12 to the control panel 14. When the control panel 14 is subsequently disarmed, the count in each sensor 12 may be reset to zero.

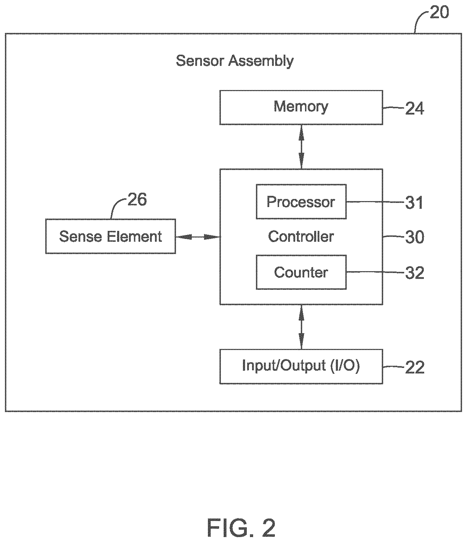

FIG. 2 is a schematic block diagram of an illustrative sensor assembly 20. The sensor assembly 20 may be considered to be an example of the sensors 12 shown in FIG. 1. The sensor assembly 20 may include a sense element 26 for detecting sensed events within a space. In some cases, the sense element 26 may be one or more of a variety of different types of sensors, such as but not limited to, door open sensors, motion sensors, temperature sensors, glass break sensors, infrared sensors, light sensors, water sensors, smoke sensors, fire sensors, noise sensors, temperature sensors, humidity sensors, video sensors with video analytics, and the like. The sense element 26 may be configured to detect one or more sensed events within the space. A controller 30 may be operative coupled to the sense element 26, and may be configured to cause an alarm message to be transmitted to a control panel (e.g., control panel 14) pertaining to the detected sensed event via a communication port, such as an I/O 22. The I/O 22 may be a bi-directional wireless communication port or a bidirectional wired communication port, for example. In some cases, the I/O 22 may be or include a wireless transmitter and/or a wireless transceiver.

The illustrative sensor assembly 20 may include a memory 24. In some cases, the memory 24 may be a non-transitory computer-readable medium configured to store instructions thereon. In some cases, one or more processors 31 (e.g., a microprocessor, microcontroller, etc.) may be operatively coupled to the memory 24 and the I/O 22. The one or more processors 31 of the controller 30 may be configured to receive instructions from the memory and execute the instructions. The instructions may be configured to cause the one or more processors 31 to receive an indication of a sensed event occurring in the space from the sense element 26 of the sensor assembly 20, and transmit an alarm message pertaining to the detected sensed event over a wireless and/or a wired communication bus via the I/O 22. After transmitting the alarm message pertaining to the detected sensed event, the one or more processors 31 may be instructed to receive an indication of a plurality of subsequent sensed events occurring in the space from the sense element 26 of the sensor assembly 20, and transmit a corresponding alarm message for each of the plurality of subsequent sensed events until the number of transmitted alarm messages reaches a sensor swinger count. When the number of transmitted alarm messages reaches the sensor swinger count, the one or more processors 31 may stop transmitting a corresponding alarm message for subsequent sensed events over the I/O 22 (e.g. over a wireless communication channel and/or wired communication bus).

The instructions may cause the one or more processors 31 to receive the sensor swinger count over the I/O 22 (e.g. wireless communication channel and/or wired communication bus), store the sensor swinger count in the memory 24, and subsequently compare the number of transmitted alarm messages to the sensor swinger count to determine when the number of transmitted alarm messages reaches the sensor swinger count. In some cases, the controller 30 includes a counter 32, and the counter 32 maintains the count of the number of transmitted alarm messages.

In some cases, the sensor assembly 20 may have an armed state and a disarmed state. In some cases, the instructions sent via the one or more processors 31 of the controller 30 may cause the one or more processors 31 to monitor for and receive a sensor arm message via the I/O 22 (e.g. over a wireless communication channel and/or wired communication bus from the control panel 14). In response to receiving a sensor arm message, the sensor assembly 20 may be switched from a disarmed sensor state to an armed sensor state. When the sensor assembly 20 is in the disarmed sensor state, the one or more processors 31 receive from the sense element 26 an indication of sensed events occurring in the space, but does not transmit alarm messages pertaining to the detected sensed events via the I/O 22 (e.g. over a wireless communication channel and/or wired communication channel to the control panel 14). However, when the sensor assembly 20 is in the armed sensor state, the one or more processors 31 monitor the sense element 26 for an indication of sensed events occurring in the space, and transmit alarm messages pertaining to the detected sensed events via the I/O 22 (e.g. over a wireless communication channel and/or wired communication channel to the control panel 14). In the armed sensor state, the one or more processors 31 identify when the number of transmitted alarm messages reaches a sensor swinger count during the corresponding armed sensor state. When the one or more processors 31 identify the the number of transmitted alarm messages reaches the sensor swinger count during the corresponding armed sensor state, the one or more processors 31 stop transmitting subsequent alarm message via the I/O 22.

In some cases, the controller 30 itself may maintain a count of the number of transmitted alarm messages during the corresponding armed sensor state, while in other cases, the control panel 14 may maintain the count, compare the count to a sensor swinger count, and notify the controller 30 of the sensor assembly 20 when the number of transmitted alarm messages during a corresponding armed sensor state reaches the sensor swinger count.

In some cases, the alarm messages may be paused for a predetermined amount of time. For example, when the controller 30 receives a sensor arm message from a control panel (e.g., control panel 14) via the I/O 22 (communication port), the sensor assembly 20 may be switched from a disarmed state to an armed state. The sense element 26 may detect a sensed event and the controller 30 may send a corresponding alarm to the control panel 14. A counter 32 within the controller 30 counts that as a first transmitted alarm. When the sense element 26 detects a plurality of subsequent events, the controller sends further alarm messages to the control panel. However, the counter 32 monitors the number of alarm message that have been transmitted during the armed period, and when the number of alarm message that have been transmitted during the armed period meets a sensor swinger count, the controller 30 pauses sending further alarm messages to the control panel 14 until, for example, the controller 30 receives a sensor disarm message from the control panel 14, thereby switching the sensor assembly 20 from the armed state to the disarmed state. At this point the counter 32 may be reset to zero and the count for the sensor assembly 20 will begin again during the next armed state.

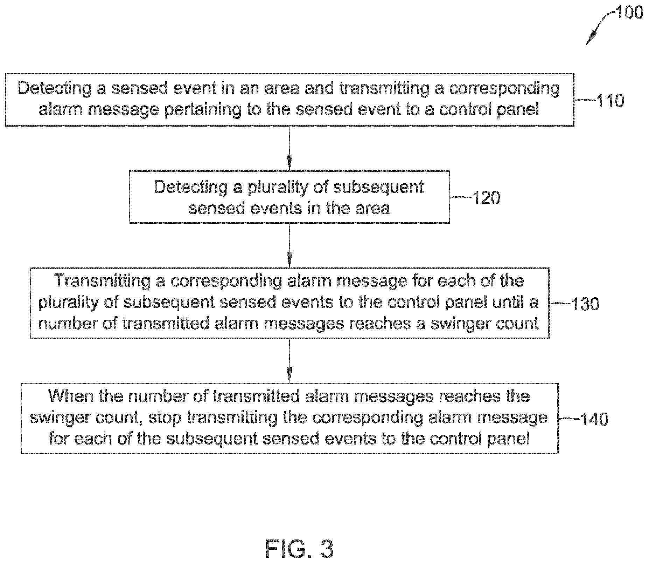

FIG. 3 is a flow diagram showing an illustrative method 100 for controlling a building monitoring system. The building monitoring system may include a sensor (e.g., sensors 12) positioned within an area for detecting one or more sensed events in the area. A sensed event may include, for example, motion, a window or door opening, a fire, a noise, weather, or the like. The sensor may be operatively coupled to a control panel which is located remote from the sensor. The control panel may be operatively coupled to a central monitoring station.

The illustrative method 100 may include the sensor detecting a sensed event in the area and transmitting a corresponding alarm message pertaining to the sensed event to a control panel, as referenced by block 110. For example, when motion is sensed by a motion sensor, the motion sensor transmits an alarm message to the control panel. The sensor may detect a plurality of subsequent sensed events in the area, as referenced by block 120, and may transmit a corresponding alarm message for each of the plurality of subsequent sensed events to the control panel until a number of transmitted alarm messages reaches a sensor swinger count, as referenced by block 130. In some cases, the control panel may report each of the alarm messages received from the sensor to a central monitoring station. In some cases, when the number of transmitted alarm messages reaches the sensor swinger count, the sensor stops transmitting a corresponding alarm message for subsequent sensed events to the control panel, as referenced by block 140. In some cases, the sensor may stop transmitting the corresponding alarm message for the subsequent sensed events to the control panel for a configurable period of time. For example, in some cases, the sensor may stop transmitting the corresponding alarm message for about five minutes, ten minutes, twenty minutes, two hours, six hours, or any other period of time as desired. In some cases, the sensor may stop transmitting the corresponding alarm message until the sensor is disarmed and subsequently rearmed. In some cases, the sensor may determine when the number of transmitted alarm messages reaches the sensor swinger count, while in other cases, the control panel 14 may determine when the number of transmitted alarm messages reaches the sensor swinger count, and the control panel 14 may report to the sensor when the number of transmitted alarm messages reaches the sensor swinger count.

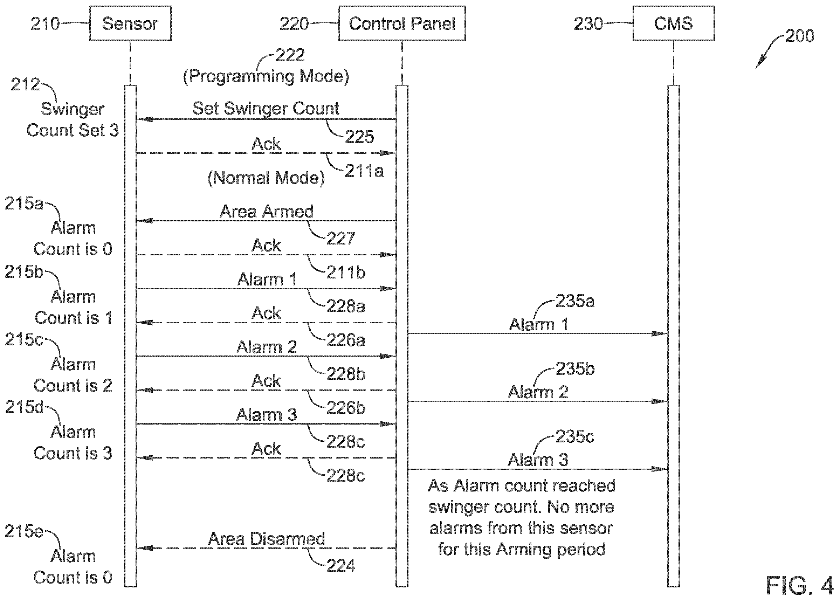

FIG. 4 is a schematic sequence diagram showing illustrative messaging in a security system 200. The illustrative security system 200 includes a sensor 210. It will be appreciated that the security system 200 may include one sensor, ten sensors, one hundred sensors, or any number of sensors so desired. The sensor 210 may include any of a variety of different types of sensors, such as but not limited to, door open sensors, motion sensors, temperature sensors, glass break sensors, infrared sensors, light sensors, water sensors, smoke sensors, fire sensors, noise sensors, temperature sensors, humidity sensors, video sensors with video analytics, and the like. These are just examples.

The sensor 210 may be configured to communicate with a control panel 220 using any of a variety of wired or wireless communication protocols. The sensor 210 may provide messages to the control panel 220 reporting the sensor 210 detected a sensed event. In some cases, the control panel 220 may provide instructions to the sensor 210, for example, the control panel 220 may instruct the sensor 210 to arm and/or disarm, for example. In some cases, the control panel 220 may set a sensor swinger count, and transmit the set sensor swinger count to the sensor 210, as referenced by 225. The sensor swinger count may represent a number of alarms each sensor 210 within the security system 200 may transmit during while the sensor 210 is armed before subsequent alarms from that sensor are no longer transmitted. In some cases, for example, the sensor may be armed when a business is closed for the night and disarmed when the business is open.

In the example shown in FIG. 4, a sensor swinger count is communicated from the control panel 222 to the sensor 210 as shown at 225. In this example the sensor swinger count has been set to three alarms as referenced by 212. At 211a, the sensor 210 sends an acknowledgment to the control panel 220, acknowledging that the sensor swinger count has been received by the sensor 210. The control panel 222 sends an armed message to the sensor 210 as shown at 227, causing the sensor 210 to enter an armed state. At 211b, the sensor 210 sends an acknowledgment to the control panel 220, acknowledging that the armed message has been received by the sensor 210. At this point, the alarm count for the sensor 210 is zero, as referenced by 215a.

The sensor 210 then detects a sensed event which occurs in the space, and transmit a first alarm message 228a pertaining to the detected sensed event to the control panel via a communication port (e.g., I/O 22). In response, the control panel 220 sends an acknowledgement 226a to the sensor 210 acknowledging that the first alarm message 228a has been received by the control panel 220. The control panel 220 then transmits a first alarm message 235a to a central monitoring station (CMS) 230. The alarm count for the sensor 210 is now 1, as indicated by 215b.

After transmitting the first alarm message 228a pertaining to the detected sensed event, the sensor 210 detects a subsequent sensed event occurring within the space, and a second alarm message 228b is transmitted to the control panel 220. The control panel 220 sends an acknowledgment 226b to the sensor 210 acknowledging that the second alarm message 228b has been received by the control panel 220. The control panel 220 then transmits a second alarm message 235b to the CMS 230. The alarm count for the sensor 210 is now 2, as indicated by 215c.

After transmitting the second alarm message 228b pertaining to the detected sensed event, the sensor 210 detects a subsequent sensed event occurring within the space, and a third alarm message 228c is transmitted to the control panel 220. The control panel 220 sends an acknowledgment 226c to the sensor 210 acknowledging that the third alarm message 228c has been received by the control panel 220. The control panel 220 then transmits a third alarm message 235c to the CMS 230. The alarm count for the sensor 210 is now 3, as indicated by 215d. At this point, the sensor swinger count 212 has been reached for the sensor 210 and the sensor 210 will no longer send an alarm message to the control panel 220 for subsequent detected sensed events until the sensor is disarmed and subsequently rearmed. In other words, the alarm has reached the swinger count 212 and therefore this particular sensor will no longer send alarm messages to the control panel 220 during this arming period. Once the area is disarmed, as indicated by 224, the alarm count resets to zero, as indicated by 215e. Thus, any one sensor may send three alarms (corresponding to the sensor swinger count) pertaining to one particular sensed event to the control panel 220 during an armed period, and once that sensor swinger count of three alarms has been reached, the corresponding sensor stops transmitting subsequent alarm messages pertaining to the sensed event to the control panel 220.

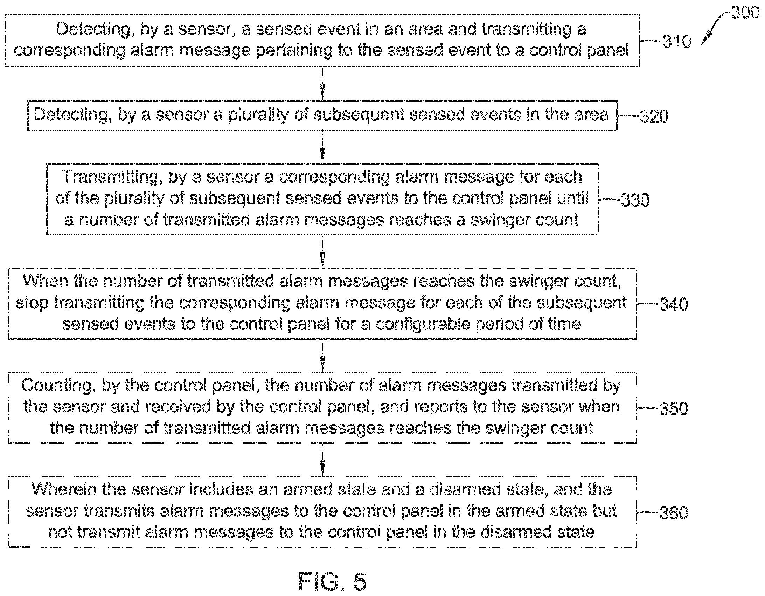

FIG. 5 is a flow diagram showing an illustrative method 300 for controlling a building monitoring system. The building monitoring system may include a sensor (e.g., sensors 12) positioned within an area for detecting one or more sensed events in the area. The sensor may be operatively coupled to a control panel remote from the sensor. The method 300 may include a sensor detecting a sensed event in the area and transmitting a corresponding alarm message pertaining to the sensed event to the control panel, as referenced by block 310. The sensor may detect a plurality of subsequent sensed events in the area, as referenced by block 320, and may transmit a corresponding alarm message for each of the plurality of subsequent sensed events to the control panel until a number of transmitted alarm messages reaches a sensor swinger count, as referenced by block 330. In some cases, the control panel may report each of the alarm messages received from the sensor to a central monitoring station. In some cases, when the number of transmitted alarm messages reaches the sensor swinger count, the sensor stops transmitting a corresponding alarm message for subsequent sensed events to the control panel, as referenced by block 340.

In some cases, the control panel may count the number of alarm messages transmitted by the sensor and received by the control panel, and may report to the sensor when the number of transmitted alarm messages reaches the sensor swinger count, as referenced by block 350. In some cases, when the sensor includes an armed state and a disarmed state, the sensor transmits alarm messages to the control panel in the armed state, but does not transmit alarm messages to the control panel in the disarmed state, as referenced by block 360. In some cases, the sensor may stop transmitting the corresponding alarm messages for the subsequent sensed events until the sensor is switched from the armed state to the disarmed state, and then back to the armed state.

By having the sensor stop transmitting alarm messages for subsequent sensed events to the control panel after reaching the sensor swinger count has a number of advantages including reduced network traffic between the sensor the control panel, increased battery life of the sensors if battery powered, reduced processing load on the sensor and the control panel, and improved alarm response time for other sensors attempting to communicate with the control panel.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A sensor assembly comprising:
a sense element for detecting sensed events in a space;
a communication port;
a controller operatively coupled to the sense element and the communication port, the controller configured to:
receive from the sense element an indication of a sensed event occurring in the space;
transmit an alarm message pertaining to the detected sensed event via the communication port;
after transmitting the alarm message pertaining to the detected sensed event, receive from the sense element an indication of a plurality of subsequent sensed events occurring in the space; and
transmit a corresponding alarm message for each of the plurality of subsequent sensed events until a number of transmitted alarm messages reaches a swinger count, and when the number of transmitted alarm messages reaches the swinger count, stop transmitting a corresponding alarm message for each of the plurality of subsequent sensed events.

2. The sensor assembly of claim 1, wherein the controller is configured to:
receive the swinger count via the communication port; and
store the swinger count in a memory of the sensor assembly.

3. The sensor assembly of claim 1, wherein the controller is configured to:
compare the number of transmitted alarm messages to the swinger count to determine when the number of transmitted alarm messages reaches the swinger count.

4. The sensor assembly of claim 3, wherein the controller includes a counter to maintain a count of the number of transmitted alarm messages.

5. The sensor assembly of claim 1, wherein the controller is configured to:
receive a message via the communication port that indicates that the number of transmitted alarm messages has reached the swinger count, and in response, the controller is configured to stop transmitting the alarm messages for each of the plurality of subsequent sensed events.

6. The sensor assembly of claim 1, wherein the controller is configured to:
receive a sensor arm message via the communication port;
in response to receiving the sensor arm message, switching the sensor assembly from a disarmed sensor state to an armed sensor state;
when in the disarmed sensor state, the controller is configured to:
receive from the sense element an indication of sensed events occurring in the space;
not transmit an alarm message pertaining to the detected sensed events via the communication port;
when in the armed sensor state, the controller is configured to:
receive from the sense element an indication of the sensed event occurring in the space;
transmit the alarm message pertaining to the detected sensed event via the communication port;
after transmit the alarm message pertaining to the detected sensed event, receiving from the sense element an indication of the plurality of subsequent sensed events occurring in the space; and
transmit the alarm message for each of the plurality of subsequent sensed events until the number of transmitted alarm messages reaches the swinger count, and when the number of transmitted alarm messages reaches the swinger count, stop transmitting an alarm message in response to each of the plurality of subsequent sensed events.

7. The sensor assembly of claim 6, wherein the controller is configured to:
transmit the alarm message for each of the plurality of subsequent sensed events until the number of transmitted alarm messages reaches the swinger count, and when the number of transmitted alarm messages reaches the swinger count, stop transmitting the alarm message in response to each of the plurality of subsequent sensed events until a sensor disarm message is received via the communication port followed by a sensor arm message.

8. The sensor assembly of claim 1, wherein the communication port is a bi-directional wireless communication port or a bidirectional wired communication port.

9. The sensor assembly of claim 1, wherein the alarm messages are transmitted via the communication port to a control panel that is remote from the sensor assembly, and wherein the control panel reports one or more alarms that correspond to one or more of the alarm messages to a central monitoring station.

10. A method for controlling a building monitoring system, the building monitoring system including a sensor positioned within an area for detecting one or more sensed events in the area, the sensor operatively coupled to a control panel remote from the sensor, the method comprising:
the sensor detecting a sensed event in the area and transmitting a corresponding alarm message pertaining to the sensed event to the control panel;
the sensor detecting a plurality of subsequent sensed events in the area; and
the sensor transmitting a corresponding alarm message for each of the plurality of subsequent sensed events to the control panel until a number of transmitted alarm messages reaches a swinger count, and when the number of transmitted alarm messages reaches the swinger count, the sensor stops transmitting a corresponding alarm message for subsequent sensed event to the control panel.

11. The method of claim 10, wherein the sensor stops transmitting a corresponding alarm message for subsequent sensed event to the control panel for a configurable period of time.

12. The method of claim 10, wherein the sensor includes an armed state and a disarmed state, and wherein the sensor transmits alarm messages to the control panel in the armed state but not transmit alarm messages to the control panel in the disarmed state, and wherein the sensor stops transmitting the corresponding alarm messages for the subsequent sensed events until the sensor is switched from the armed state to the disarmed state and then back to the armed state.

13. The method of claim 10, wherein the control panel reports each of the alarm messages received from the sensor to a central monitoring station.

14. The method of claim 10, wherein the control panel transmits a swinger count messaged to the sensor that defines the swinger count, and the sensor receives the swinger count message from the control panel and stores the swinger count in the sensor.

15. The method of claim 10, wherein the control panel counts the number of alarm messages transmitted by the sensor and received by the control panel, and reports to the sensor when the number of transmitted alarm messages reaches the swinger count.
